# EUROPÄISCHE PATENTSCHRIFT

(11) **EP 1 046 455 B1**
(45) Veröffentlichungstag und Bekanntmachung des Hinweises auf die Patenterteilung: **12.02.2003**
(21) Anmeldenummer: 00111741.5
(22) Anmeldetag: 17.06.1999
(51) Int. Cl.: B23P 11/02, F16B 4/00, F16D 1/08

(54) **Verfahren zur Herstellung einer lösbaren Verbindung zwischen zwei Bauteilen und Verbindungssystem zur Durchführung des Verfahrens**
Method for removably connecting two members and connection system for realising the method
Procédé pour assembler deux éléments de manière détachable et système d' assemblage pour mettre ledit procédé en oeuvre

(30) Priorität: 18.06.1998 DE 19827109; 01.08.1998 DE 19834739
(43) Veröffentlichungstag der Anmeldung: 25.10.2000
(62) Teilanmeldung aus: 99929251.9
(73) Patentinhaber: Schunk GmbH & Co. KG Fabrik für Spann- und Greifwerkzeuge, 74348 Lauffen (DE)
(72) Erfinder: Retzbach, Thomas, 74357 Bönnigheim (DE)
(74) Vertreter: Paul, Dieter-Alfred, Dipl.-Ing.

(56) Entgegenhaltungen:
- CH-A- 461 183
- DE-A- 4 008 906
- DE-A- 19 624 048
- DE-C- 19 521 755
- US-A- 4 477 010

## Beschreibung

Die vorliegende Erfindung betrifft ein Verfahren und ein Verbindungssystem zur Herstellung einer lösbaren Verbindung zwischen zwei Bauteilen, bei dem eines der Bauteile durch radiale Druckkräfte derart elastisch verformt wird, daß eine wirksame Umfangskontur der entsprechenden wirksamen Umfangskontur des anderen Bauteils mit vorgegebenem Spiel entspricht, so daß die beiden Bauteile ineinandersteckbar sind, und bei dem nach dem Zusammenstecken der beiden Bauteile eine Druckverbindung hergestellt wird, indem das verformte Bauteil durch Verringerung bzw. Aufhebung der radialen Druckkräfte elastisch rückverformt wird.

Verfahren zur Herstellung einer reibschlüssigen Verbindung zwischen zwei Bauteilen dieser Art sind aus der DE 195 21 755 C1 sowie der DE 196 24 048 A1 bekannt. Bei diesen Verfahren wird in übereinstimmender Weise ein polygones oder ovales Bauteil durch Aufbringung von radialen Druckkräften elastisch in eine runde Form gebracht, so daß ein runder Schaft unter Beibehaltung der radialen Druckkräfte montiert werden kann. Wenn dann die Radialkräfte verringert oder aufgehoben werden, federt das verformte Bauteil in seine ovale oder polygone Ausgangsform zurück, so daß der Schaft darin über einen Preßsitz fixiert wird.

Ein ähnliches Verbindungssystem ist aus der DE 40 08 906 A1 bekannt, wobei dort anstelle der polygonen Formgebung Mitnehmerelemente am verformbaren Element vorgesehen sind, die mit dem anderen Bauteil in Eingriff bringbar sind.

Diese Art der Verbindung zweier Bauteile hat sich in der Praxis durchaus bewährt. Es wird allerdings häufig als nachteilig angesehen, daß extrem hohe Druckkräfte erforderlich sind, wenn das zu verformende Bauteil große Wandstärken besitzt, und dann auch die auftretenden Verformungen sich nicht exakt beherrschen lassen, d.h. zum Teil undefiniert sind.

Aufgabe der Erfindung ist es daher, ein Verfahren sowie ein verbindungssystem der eingangs genannten Art anzugeben, mit denen diese Nachteile überwunden werden können, d.h. die eine problemlose Verwendung von zu verformenden Bauteilen mit großer Wandstärke ermöglichen.

Diese Aufgabe ist erfindungsgemäß dadurch gelöst, daß als elastisch verformbares Bauteil ein Hohlkörper verwendet wird, der mehrere sich in Umfangsrichtung erstreckende Aussparungen aufweist, die sich jeweils in Umfangsrichtung gesehen in ihrem Mittelbereich zu der mit dem anderen Bauteil in Kontakt kommenden wirksamen Umfangskontur durch einen radialen Einschnitt öffnen, und daß die radialen Druckkräfte auf die der wirksamen Umfangskontur gegenüberliegende Innen- bzw. Außenkontur des Hohlkörpers so ausgeübt werden, daß ihre Wirkungslinien durch die radialen Einschnitte velaufen, so daß die zwischen den Öffnungsbereichen gebildeten Körpersegmente durch die Verformung im wesentlichen radial in den Bereich der Hohlräume bewegt werden. Wenn in diesem Fall radiale Druckkräfte in den Bereichen, wo die Aussparungen zu der wirksamen Umfangskontur hin öffnen, auf den Hohlkörper ausgeübt werden, hat dies zur Folge, daß die dazwischenliegenden Körpersegmente, an denen die wirksame Umfangskontur ausgebildet ist, radial in den Bereich der Aussparungen hineingezogen werden, wodurch das für das Zusammenfügen der beiden Bauteile erforderliche Spiel erreicht wird.

Wenn beispielsweise ein Schaft von außen gespannt werden soll, wird ein Hohlkörper beispielsweise in Form eines Ringelements verwendet, bei dem die Aussparungen zum Innenumfang hin öffnen, und werden radiale Druckkräfte von außen auf den Hohlkörper ausgeübt. Dies hat zur Folge, daß die zwischen den Kraftangriffspunkten liegenden Bereiche des Hohlkörpers nach außen gedrückt werden, wodurch auch die Körpersegmente im wesentlichen ohne Verformung nach außen bewegt werden, so daß der Schaft in den Hohlkörper eingeschoben werden kann. Die Aussparungen, die beispielsweise in den Hohlkörper durch einen Erodiervorgang eingebracht werden können, müssen dabei in radialer Richtung eine solche Breite besitzen, daß die Körpersegmente ausreichend Platz zum Ausweichen haben und können beispielsweise in Form von radialen Einschnitten oder Schlitzen ausgebildet sein.

Dadurch, daß die wirksame Umfangskontur des verformbaren Bauteils im unbelasteten und im belasteten Zustand im wesentlichen gleich ist, sind besondere Bearbeitungsvorgänge bei der Herstellung dieses Bauteils nicht erforderlich. Zum Spannen eines runden Schafts muß beispielsweise an dem Hohlkörper lediglich eine runde Innenkontur hergestellt werden, deren Radius zur Erzeugung des Preßsitzes etwas kleiner ist als die des Schaftes, d.h. die Innenkontur liegt im ungespannten Zustand vollständig innerhalb der Umfangskontur des zu spannenden Schafts.

Wenn mit dem Hohlkörper eine Hohlwelle außenseitig gespannt werden soll, öffnen die Aussparungen zum Außenumfang des Hohlkörpers hin und werden die radialen Druckkräfte von der Innenseite her auf den Hohlkörper aufgebracht. Dies hat zur Folge, daß die Körpersegmente, welche zwischen den Öffnungsbereichen gebildet werden, in den Bereich der Aussparungen nach innen gezogen werden, so daß der Hohlkörper in die Hohlwelle eingeschoben werden kann. Auch in diesem Fall erfolgt die Radialbewegung der Körpersegmente im wesentlichen ohne Verformung der außenliegenden wirksamen Umfangskontur, die entsprechend im ungespannten Zustand eine kreisrunde Form hat, deren Durchmesser etwas größer als der Innendurchmesser der Hohlwelle ist.

Die Hohlräume sollten sich über einen wesentlichen Umfangsbereich des Hohlkörpers erstrecken. Als zweckmäßig hat es sich erwiesen, wenn sie sich insgesamt über wenigsten 200°, insbesondere über etwa 280° bis 300° erstrekken, so daß sie voneinander nur durch schmale Stegbereiche getrennt sind. Gemäß einer bevorzugten Ausführungsform sind in dem Hohlkörper insgesamt drei Aussparungen vorgesehen, die sich jeweils über einen Umfangsbereich von 80 bis 100° erstrecken, wobei sie in bevorzugter Weise gleichmäßig verteilt über den Umfang angeordnet sind.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine erste Ausführungsform eines erfindungsgemäßen Verbindungssystems zum Spannen eines Schaftes im Spannzustand,
- Figur 2: das Verbindungssystem aus Figur 1 im Füge- und/oder Lösezustand;
- Figur 3: das verformbare Bauteil einer zweiten Ausführungsform eines erfindungsgemäß ausgebildeten Verbindungssystems zum Außenspannen von Werkstücken im unbelasteten Zustand und
- Figur 4: das verformbare Bauteil aus Figur 3 im belasteten Zustand.

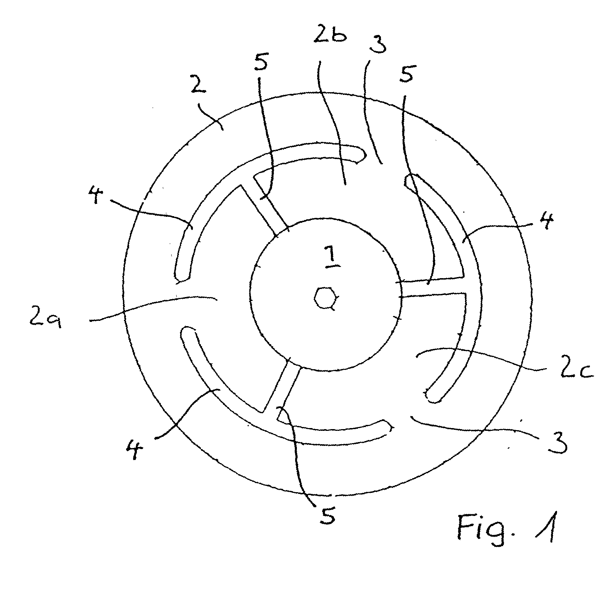

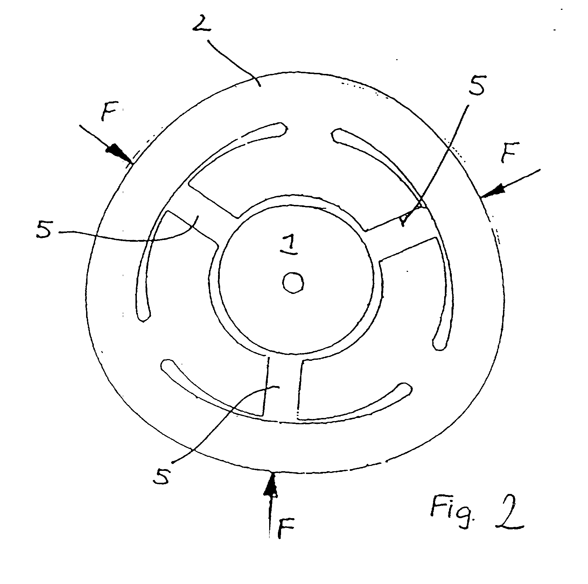

In den Figuren 1 und 2 ist eine Ausführungsform eines erfindungsgemäß ausgebildeten Verbindungssystems dargestellt. Zu diesem Verbindungssystem gehören ein runder Schaft 1 und ein auf dem Schaft 2 befestigter Hohlkörper in Form eines Ringelements 2. Das Ringelement 2 hat eine kreisförmige Innen- und Außenkontur, wobei der Durchmesser der Innenkontur etwas kleiner als der Durchmesser des Schaftes 1 ist, d.h. die Innenkontur vollständig innerhalb der Außenkontur des Schaftes 1 liegt. Das Ringelement 2 weist drei Hohlräume in Form von nutartigen Aussparungen 4 auf, die sich über jeweils einen Umfangsbereich von etwa 100° erstrecken, so daß zwischen ihnen lediglich schmale Stegbereiche 3 verbleiben. Die Aussparungen 4 öffnen zur Innenkontur durch radiale nutartige Einschnitte 5, die in Umfangsrichtung gesehen jeweils mittig von den Aussparungen 4 radial nach innen abragen und entsprechend einen Winkelversatz von 120° zueinander haben.

Auf diese Weise werden drei Ringsegmente 2a, 2b, 2c gebildet, die in Umfangsrichtung jeweils durch zwei der Einschnitte 5 und nach außen durch die Aussparungen 4 begrenzt und mit dem Rest des Ringelements 2 durch die zwischen den Aussparungen 4 gelegenen Stegbereiche 3 verbunden sind. Die Aussparungen 4 und die radialen Einschnitte 5 können in das Ringelement 2 erodiert oder anderweitig eingebracht sein.

Zum Lösen bzw. in umgekehrter Weise zum Herstellen der in Figur 1 dargestellten Verbindung zwischen dem Schaft 1 und dem Ringelement 2 werden von außen auf das Ringelement 2 radiale Druckkräfte F ausgeübt, wobei die Kraftangriffspunkte so gewählt sind, daß die Wirkungslinien der Kräfte F etwa mittig durch die radialen Einschnitte 5 verlaufen. Durch die Druckkräfte F wird das Ringelement 2 im Bereich der Kraftangriffspunkte radial nach innen und gleichzeitig in den etwa mittig zwischen den Kraftangriffspunkten gelegenen Umfangsbereichen, in denen auch die Stegbereiche 3 liegen, radial nach außen elastisch verformt, wie dies in Figur 2 die Strichlinien darstellen. Dabei werden die Ringsegmente 2a, 2b, 2c ebenfalls radial nach außen bewegt, wofür die Aussparungen 4 den nötigen Freiraum lassen, jedoch gar nicht oder nur unwesentlich verformt. Durch die radiale Bewegung der Ringsegmente 2a, 2b, 2c löst sich deren wirksame Innenkontur von dem Schaft 1, so daß dieser aus dem Ringelement 2 herausgezogen werden kann.

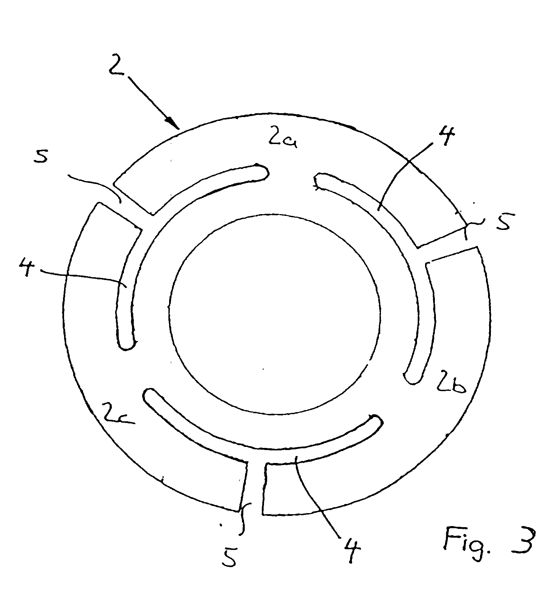

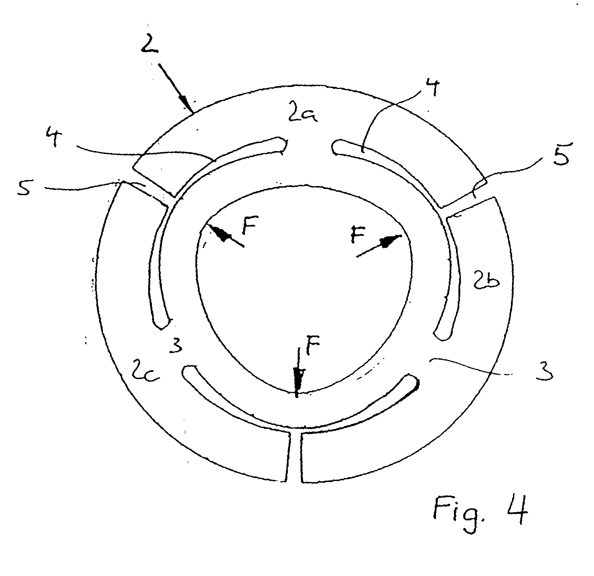

In den Figuren 3 und 4 ist ein als Ringelement 2 ausgebildeter Hohlkörper eines weiteren erfindungsgemäßen Verbindungssystems dargestellt, mit dem ein nicht dargestellter Hohlkörper wie beispielsweise eine Hohlwelle außenseitig gespannt werden kann. Wie bei der ersten Ausführungsform weist das Ringelement 2 Aussparungen 4 auf, die sich entlang des mittleren Radius des Ringelements 2 in Umfangsrichtung über jeweils etwa 100° erstrecken, so daß zwischen ihnen schmale Stegbereiche 3 verbleiben. Von jeder Aussparung 4 erstreckt sich ein Einschnitt 5 radial nach außen, wobei die Einschnitte 5 in Umfangsrichtung betrachtet etwa mittig von den Aussparungen 4 abragen, so daß sie einen Winkelversatz von jeweils 120° zueinander haben. Der Außenumfang des Ringelements 2 ist so gewählt, daß er etwas kleiner als der Innenumfang des zu spannenden Werkstücks ist. Wenn das Ringelement 2 dann in dem Werkstück fixiert werden soll, werden, wie in Figur 4 angedeutet ist, am Innenumfang auf das Ringelement 2 Druckkräfte F ausgeübt, die so angreifen, so daß ihre Wirkungslinien F etwa mittig durch die Einschnitte 5 verlaufen. Durch die radialen Druckkräfte F wird das Ringelement 2 am Innenumfang im Bereich der Kraftangriffspunkte nach außen verformt, wofür die Aussparungen 5 den erforderlichen Raum lassen, und gleichzeitig wird das Ringelement etwa mittig zwischen den Kraftangriffspunkten elastisch nach innen verformt, wodurch die Ringsegmente 2a, 2b, 2c nach innen gezogen werden, wofür die Aussparungen 4 ebenfalls den entsprechenden Freiraum bieten (Fig. 4).

Da auf die Ringsegmente 2a, 2b, 2c keine direkten Kräfte wirken, erfahren sie lediglich eine Radialbewegung, jedoch ansonsten im wesentlichen keine Verformung; es werden lediglich die Aussparungen 5 und die Einschnitte 5 etwas kleiner. Durch die Kraftaufbringung wird somit der Außendurchmesser des Ringelements 2 verkleinert, so daß es in das zu spannende Werkstück eingesetzt werden kann. Wenn jetzt die radialen Druckkräfte verringert oder aufgehoben werden, erfolgt eine elastische Rückverformung des Ringelements 2 mit der Folge, daß sich sein Durchmesser wieder vergrößert und die Ringsegmente 2a, 2b, 2c mit der elastischen Rückstellkraft gegen die Innenwandung des Werkstücks drücken, wodurch ein Preßsitz gebildet wird.

## Patentansprüche

1. Verfahren zur Herstellung einer lösbaren Verbindung zwischen zwei Bauteilen (2), bei dem eines der Bauteile (2) durch radiale Druckkräfte derart elastisch verformt wird, daß eine wirksame Umfangskontur der entsprechenden wirksamen Umfangskontur des anderen Bauteils (1) mit vorgegebenem Spiel entspricht, so daß die beiden Bauteile (2) ineinandersteckbar sind, und bei dem nach dem Zusammenstecken der beiden Bauteile (2) eine Druckverbindung hergestellt wird, indem das verformte Bauteil (2) durch Verringerung bzw. Aufhebung der radialen Druckkräfte elastisch rückverformt wird, **dadurch gekennzeichnet, daß** als elastisch verformbares Bauteil ein Hohlkörper (2) verwendet wird, der mehrere sich in Umfangsrichtung erstreckende Hohlräume (4) aufweist, die sich jeweils in Umfangsrichtung gesehen in ihrem Mittelbereich zu der wirksamen Umfangskontur hin durch einen radialen Einschnitt (5) öffnen, und daß die radialen Druckkräfte auf die der wirksamen Umfangskontur gegenüberliegende Innen- bzw. Außenkontur des Hohlkörpers (2) so ausgeübt werden, daß ihre Wirkungslinien durch die radialen Einschnitte (5) verlaufen.

2. Verfahren nach Anspruch 1, **dadurch gekennzeichnet, daß** die radialen Druckkräfte gleichmäßig verteilt über den Umfang auf den Hohlkörper (2) ausgeübt werden.

3. Verfahren nach Anspruch 1 oder 2 zum wiederholbaren Befestigen eines verformbaren Hohlkörpers (2) auf einem Schaft (1), **dadurch gekennzeichnet, daß** ein Hohlkörper (2) verwendet wird, dessen wirksame Innenkontur im ungespannten Zustand vollständig innerhalb der Umfangskontur des zu spannenden Schafts (1) liegt.

4. Verfahren nach Anspruch 1 oder 2 zum wiederholbaren Befestigen eines elastisch verformbaren Hohlkörpers (2) in einer Ausnehmung eines Bauteils (1), **dadurch gekennzeichnet, daß** ein Hohlkörper (2) verwendet wird, dessen wirksame Außenkontur im ungespannten Zustand vollständig außerhalb der Umfangskontur des anderen Bauteils (1) liegt.

5. Verbindungssystem mit zwei zu verbindenden Bauteilen (2), bei dem eines der Bauteile (2) durch radiale Druckkräfte derart elastisch verformbar ist, daß eine wirksame Umfangskontur der entsprechenden wirksamen Umfangskontur des anderen Bauteils (1) mit vorgegebenem Spiel entspricht, so daß die beiden Bauteile (2) ineinandersteckbar sind, und bei dem nach dem Zusammenstecken der beiden Bauteile (2) eine Druckverbindung herstellbar ist, indem das verformbare Bauteil (2) durch Verringerung bzw. Aufhebung der radialen Druckkräfte elastisch rückverformt wird, **dadurch gekennzeichnet, daß** das elastisch verformbare Bauteil ein Hohlkörper (2) ist, der in seiner Wandung mehrere Hohlräume (4) aufweist, die zu der wirksamen Umfangskontur durch mittig von ihnen ausgehende radiale Einschnitte (5) öffnen.

6. Verbindungssystem nach Anspruch 5 zum Befestigen eines verformbaren Hohlkörpers (2) auf einem Schaft (1), **dadurch gekennzeichnet, daß** die wirksame Innenkontur des Hohlkörpers (2) im ungespannten Zustand vollständig innerhalb der Umfangskontur des zu spannenden Schafts (1) liegt.

7. Verbindungssystem nach Anspruch 5, zum wiederholbaren Befestigen eines elastisch verformbaren Hohlkörpers (2) in einer Ausnehmung eines Bauteils (1), **dadurch gekennzeichnet, daß** die wirksame Außenkontur des Hohlkörpers (2) im ungespannten Zustand vollständig außerhalb der Umfangskontur des anderen Bauteils (1) liegt.

8. Verbindungssystem nach einem der Ansprüche 5 bis 7, **dadurch gekennzeichnet, daß** der Hohlkörper (2) im ungespannten Zustand eine runde Innenkontur besitzt.

9. Verbindungssystem nach einem der Ansprüche 5 bis 8, **dadurch gekennzeichnet, daß** der Hohlkörper (2) im ungespannten Zustand eine kreisrunde Außenkontur besitzt.

10. Verbindungssystem nach einem der Ansprüche 5 bis 9, **dadurch gekennzeichnet, daß** die Hohlräume (4) sich insgesamt über wenigstens 200°, vorzugsweise über 200 bis 300°, in Umfangsrichtung erstrecken und voneinander nur durch schmale Stegbereiche getrennt sind.

11. Verbindungssystem nach Anspruch 10, **dadurch gekennzeichnet, daß** der Hohlkörper (2) drei Hohlräume (4) aufweist, die sich jeweils über einen Umfangsbereich von 80° bis 100° erstrecken und insbesondere gleichmäßig verteilt über den Umfang des Hohlkörpers (2) angeordnet sind.

## Claims

1. Method for making a releasable connection between two assembly components (2) in which one of the assembly components (2) is elastically reshaped by radial pressure in such a manner that an effective peripheral contour corresponds with a respective effective peripheral contour of the other assembly component (1) with specified play so that both assembly components (2) can be inserted into each other; and after insertion of the two assembly components (2) into each other a pressure connection is made in that the shaped assembly component (2) is elastically reshaped by way of reduction or cancellation of the radial pressure loads, **characterised in that** the elastically reshapable assembly component is a hollow body (2) comprising a plurality of peripherally extending hollow areas (4) which, as seen in the peripheral direction, open in their central area towards the effective peripheral contour via a radial cut (5), and the radial pressure loads are applied to the inside and outside contour of the hollow body (2) opposite the effective peripheral contour in such a manner that their effective lines extend through the radial cuts (5).

2. Method according to Claim 1, **characterised in that** the radial pressure loads are applied peripherally evenly spaced to the hollow body (2).

3. Method according to Claim 1 or 2 for repeated fixing of a reshapable hollow body (2) onto a shaft (1), **characterised in that** a hollow body (2) is used the effective inside contour of which lies in an untensioned state entirely within the peripheral contour of the shaft (1) to be clamped.

4. Method according to Claim 1 or 2 for repeated fixing of an elastically reshapable hollow body (2) in a recess of an assembly component (1), **characterised in that** a hollow body (2) is used the effective outside contour of which lies in its untensioned state fully outside the peripheral contour of the other assembly component (1).

5. Connecting system with two assembly components (2) to be connected, and one of the assembly components (2) can be elastically reshaped by radial pressure loads in such a manner that one effective peripheral contour corresponds with the respective effective peripheral contour of the other assembly component (1) with specified play, so that both assembly components (2) can be inserted into each other, and after joining of the two assembly components (2) a pressure connection can be made in that the reshapable assembly component (2) is elastically reshaped back by reduction or cancellation of the radial pressure loads, **characterised in that** the elastically reshapable assembly component is a hollow body (2) having in its wall a plurality of hollow areas (4) which open towards the effective peripheral contour through radial cuts (5) extending centrally therefrom.

6. Connecting system according to Claim 5 for fixing a reshapable hollow body (2) on a shaft (1), **characterised in that** the effective inside contour of the hollow body (2) in its untensioned state lies completely inside the peripheral contour of the shaft (1) which is to be clamped.

7. Connecting system according to Claim 5 for repeated fixing of an elastically reshapable hollow body (2) in a cut of an assembly component (1), **characterised in that** the effective outside contour of the hollow body (2) lies in its untensioned state completely outside the peripheral contour of the other assembly component (1).

8. Connecting system according to one of Claims 5 to 7, **characterised in that** the hollow body (2) in its untensioned state has a round inside contour.

9. Connecting system according to one of Claims 5 to 8, **characterised in that** the hollow body (2) in its untensioned state has a circular outside contour.

10. Connecting system according to one of Claims 5 to 9, **characterised in that** the hollow areas (4) extend in total over at least 200°, preferably 200 to 300°, in the peripheral direction and are separated from each other only by narrow web areas.

11. Connecting system according to Claim 10, **characterised in that** the hollow body (2) has three hollow spaces (4) which extend over a peripheral area of between 80° and 100° and which are in particular evenly spaced over the periphery of the hollow body (2).

## Revendications

1. Procédé pour fabriquer une liaison amovible entre deux composants (2), dans lequel procédé un des composants est déformé élastiquement par des forces de pression radiales de manière à ce qu'un contour circonférentiel effectif corresponde à un contour circonférentiel effectif correspondant de l'autre composant (1) avec un jeu prédéterminé de sorte que les deux composants (2) puissent s'emboîter et dans lequel procédé, une liaison à pression puisse se former après l'emboîtement des deux composants (2), dans laquelle liaison le composant (2) déformé est redéformé de manière élastique par la diminution ou le retrait des forces de pression radiales, **caractérisé en ce qu'**on utilise un corps creux (2) comme composant déforméable élastiquement qui présente plusieurs cavités (4) s'étendant dans la direction circonférentielle; lesquelles cavités ouvrent à chaque fois dans leur zone médiane vue en direction de la circonférence par une entaille (5) radiale vers le contour circonférentiel effectif que les forces de pression radiales sont exercées sur le contour extérieur ou intérieur du corps creux (2) se trouvant en face du contour circonférentiel effectif de sorte que ses lignes effectives s'étendent à travers les entailles radiales.

2. Procédé selon la revendication 1, **caractérisé en ce que** les forces de pression radiales sont exercées tout en étant réparties de manière régulière sur la circonférence sur le corps creux (2).

3. Procédé selon la revendication 1 ou 2 destiné à fixer à nouveau un corps creux (2) déformable sur une tige (1), **caractérisé en ce qu'**on utilise un corps creux (2) dont le contour intérieur effectif se trouve dans un état non serré et complètement à l'intérieur du contour circonférentiel de la tige (1) destinée à être serrée.

4. Procédé selon la revendication 1 ou 2 destiné à fixer à nouveau un corps creux (2) déformable élastiquement dans un évidement du composant (1), **caractérisé en ce qu'**un corps creux (2) est utilisé dans un état non serré complètement à l'extérieur du contour circonférentiel de l'autre composant (1).

5. Système de liaison avec deux composants (2) à lier dont l'un des composants (2) peut être déformé élastiquement par des forces de pression de sorte qu'un contour circonférentiel effectif corresponde à un contour circonférentiel effectif correspondant de l'autre composant (1) avec un jeu prédéterminé de sorte que les deux composants (2) puissent s'emboîter et dans lequel procédé, une liaison à pression puisse se former après l'emboîtement des deux composants (2), dans laquelle liaison le composant (2) déformé est redéformé de manière élastique par la diminution ou le retrait des forces de pression radiales, **caractérisé en ce que** le composant déformable élastiquement est un corps creux (2) qui présente plusieurs cavités (4) dans sa paroi, lesquelles cavités s'ouvrent vers le contour circonférentiel effectif par des entailles (5) radiales partant du milieu des cavités.

6. Système de liaison selon la revendication 5 destiné à fixer un corps creux (2) déformable sur une tige (1), **caractérisé en ce que** le contour intérieur du corps creux (2) effectif se trouve dans un état non serré , complètement l'intérieur du contour circonférentiel de la tige (1) destinée à être serrée.

7. Système de liaison selon la revendication 5 destiné à fixer à nouveau un corps creux (2) déformable élastiquement dans un évidement d'un composant (1), **caractérisé en ce que** le contour extérieur effectif du corps creux (2) se trouve dans un état complètement desserré à l'extérieur du contour circonférentiel de l'autre composant (1).

8. Système de liaison selon une des revendications 5 à 7, **caractérisé en ce que** le corps creux (2) comprend une structure intérieure ronde dans un état non serré.

9. Système de liaison selon une des revendications 5 à 8, **caractérisé en ce que** le corps creux (2) comprend un contour extérieur circulaire dans un état non serré.

10. Système de liaison selon une des revendications 5 à 9, **caractérisé en ce que** les cavités (4) s'étendent en tout sur au moins 200°, de préférence 200 à 300° en direction de la circonférence et sont séparées les unes par rapport aux autres par des zones de traverses étroites.

11. Système de liaison selon la revendication 10, **caractérisé en ce que** le corps creux (2) présente deux cavités (4) qui s'étendent à chaque fois, sur une zone circonférentielle de 80° à 100° et sont disposées tout en étant réparties régulièrement sur la circonférence du corps creux (2).
